# EUROPEAN PATENT APPLICATION

(11) **EP 1 333 215 A1**
(43) Date of publication of application: **06.08.2003**
(21) Application number: 03250070.4
(22) Date of filing: 07.01.2003
(51) Int. Cl.: F16L 25/00

(54) **Pipe couplings**

(30) Priority: 01.02.2002 GB 0202303
(71) Applicant: Cable Management Products Limited, London NW11 8DS (GB)
(72) Inventor: Youssefifar, Fatullah, Cheadle, Cheshire SK8 1NT (GB)
(74) Representative: Flint, Jonathan McNeill

(57) **Abstract**

A coupling 2 for a corrugated pipe 1 has two retainers 19 and 20 hinged integrally with the coupling so that they can be folded down to project through apertures 26 and 27 in the coupling and engage between corrugations 11 on the pipe. When folded down in full engagement with the pipe 1, spring levers 44 on opposite sides of the retainers 19 and 20 engage under ledges 30 in the aperture. The levers 44 cannot engage when a retainer 19, 20 does not fully engage between the corrugations 11, thereby making it apparent that the retainer is not fully engaged.

## Description

This invention relates to pipe couplings of the kind for a corrugated pipe, the coupling including a housing and a retainer for retaining the pipe within the housing.

Connection to a corrugated pipe or conduit can be made by means of a coupling in which the end of the pipe is inserted, the coupling having a locking member in the form of a resilient catch or tooth that engages between corrugations to prevent the pipe and coupling being pulled apart after assembly. Couplings of this kind are described, for example, in US5094482, US5041256, GB2225550, US5150930 and US4923227 and are sold by Adaptaflex Limited of Coleshill, Birmingham, UK. Because the catch must engage between corrugations to lock the conduit in the coupling, the conduit should be pulled back slightly after insertion to ensure that the catch has fully engaged. If this is not done, there is a risk that the catch might sit on a corrugation and not be properly locked. Preferably, couplings should ensure full engagement with a conduit, even if used by an inexperienced installer.

It is an object of the present invention to provide an alternative pipe coupling.

According to the present invention there is provided a coupling of the above-specified kind, characterised in that the retainer is manually movable between a first, unlocked position and a second locking position, and that the retainer and the housing are provided with engaging formations that fully engage only when the retainer is in correct engagement between adjacent corrugations on the pipe.

The engaging formations may include at least one spring member, which may be provided on the retainer. The retainer may have two spring members on opposite sides. The or each spring member may be arranged to engage a ledge or a respective ledge on the housing. The retainer may be hinged with the housing as an integral moulding with the housing. The retainer may be attached with the housing by flexible webs at each end. The retainer may lie flush with the outside of the housing when fully locked and project from the outside of the housing when not fully locked

A coupling for a conduit according to the present invention, will now be described, by way of example, with reference to the accompanying drawings, in which:
- Figure 1: is a sectional side elevation view of one half of the coupling before assembly;
- Figure 2: is a transverse cross-sectional side view of the coupling along the line II-II of Figure 1 when fully assembled;
- Figure 3: is an end view of a part of the coupling along the arrow III;
- Figure 4: is a sectional side elevation view of an alternative coupling with its retaining means in an open position;
- Figure 5: is a plan view of the coupling in Figure 4;

- Figure 6: is a sectional side elevation view of the coupling of Figures 4 and 5 with its retaining means in a closed position;
- Figure 7: is a sectional side elevation view of a part of another alternative coupling with its retaining means in an open position; and
- Figure 8: is a sectional side elevation view of the coupling in Figure 7 with its retaining means in a closed position.

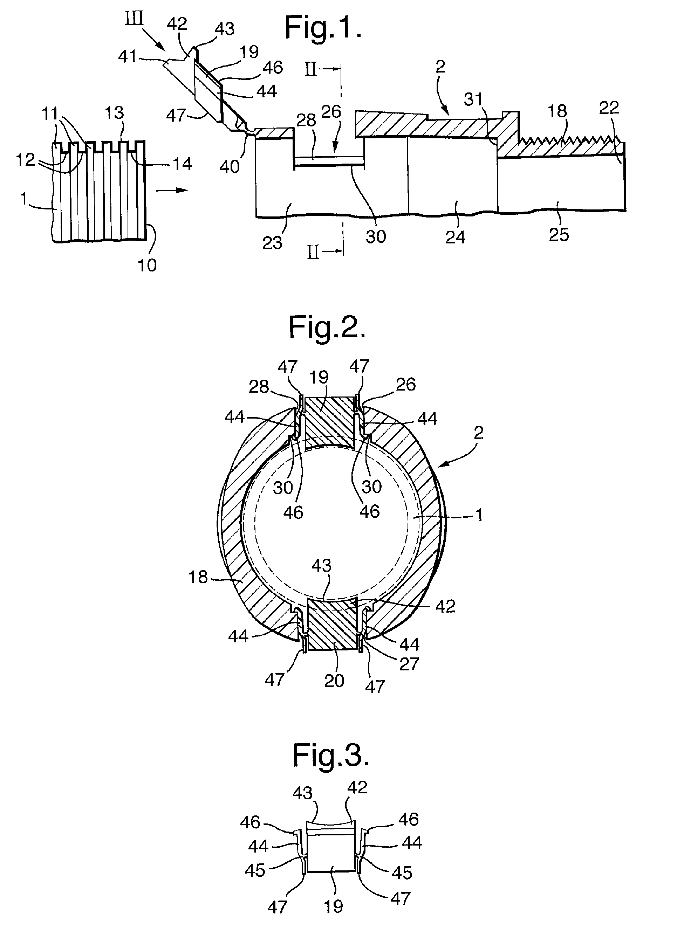

With reference first to Figures 1 to 3, the pipe or conduit 1 is entirely conventional and is of a rigid but bendable plastics material with a circular section and has corrugations 11 and 12 on its external and internal surface 13 and 14 respectively. The right-hand end 10 of the conduit 1 is cut square.

The coupling 2 is an integral, single-piece moulding of a rigid plastics material of substantially tubular shape. The coupling has a main body or housing 18 and two integral retaining catch members 19 and 20 diametrically opposite one another. The housing 18 is similar to previous housings, being of substantially tubular shape and having a bore 22 extending axially along its length and divided into three portions, namely an entrance portion 23, an intermediate portion 24 and an exit portion 25. The entrance portion 23 at the left-hand end of the housing 18 has a constant diameter slightly greater than the external diameter of the conduit 1. Two square apertures 26 and 27 are formed through the wall of the housing 18 about halfway along the entrance portion 23 and diametrically opposite one another. The two longitudinal sides 28 of the apertures 26 and 27 each have an undercut ledge 30 along their inner edges. The intermediate portion 24 of the bore 22 tapers slightly along its length from the diameter of the entrance portion 23, at its left-hand end, to a diameter that is slightly smaller than the external diameter of the conduit 1, at its right-hand end. The exit portion 25 has a reduced constant diameter and is separated from the intermediate portion 24 by an internal step 31.

The retaining catch members 19 and 20 are attached with the housing 18 at one end by an integral web or living hinge 40. When fully assembled, the catches 19 and 20 are located within respective ones of the apertures 26 and 27. At their opposite, free ends 41 the catches 19 and 20 have an inwardly-directed inclined tooth 42 extending laterally of the catch and having an edge 43 that is curved with the same radius as the external radius of the conduit 1. Midway along its length, each catch 19 and 20 has a pair of retaining levers 44, which extend radially inwardly on laterally opposite sides of the catch. Each lever 44 is resiliently attached with the main part of the catch 19 and 20 by a spring leaf 45 at a location about two thirds the way along its length. The inner end of each lever 44 diverges slightly outwardly and has an outwardly-facing lip 46 located to engage under a respective ledge 30 in the apertures 26 and 27. The outer end 47 of each lever 44 is accessible externally to provide flaps by which the catches 19 and 20 can be released.

Before assembly on the conduit 1, the two catches 19 and 20 are in a first, unlocked position, as shown in Figure 1, where they are disengaged from the apertures 26 and 27. The conduit 1 is pushed into the coupling 2 with the catches 19 and 20 in this position. When fully inserted, the end 10 of the conduit 1 makes a sealing engagement in the tapered intermediate region 24 of the bore 22. The user then manually moves the two catches 19 and 20 about their hinged ends 40 into the respective apertures 26 and 27 until the lips 46 on each lever 44 snaps into engagement with respective ledges 30, which is readily apparent to the user. When the catches 19 and 20 are fully engaged in this way, the teeth 42 locate between adjacent corrugations 11 on the conduit 1 so as to lock the coupling 2 on the conduit. The catches 19 and 20 can only be fully engaged, when the coupling 2 is assembled on a conduit 1, if their teeth 42 lie between two corrugations 11. If instead, the teeth 42 were to lie on a corrugation 11, this would prevent the catches 19 and 20 being inserted far enough for the levers 44 to engage; when released, the catches would swing back to their unlocked position.

After engagement, the coupling 2 can readily be removed from the conduit 1 by pulling the outer ends 47 of the levers 44 laterally outwardly so that the lips 46 move together and out of engagement with the ledges 30. This enables the two catches 19 and 20 to be swung out about their hinges 40 so that the conduit 1 can be removed.

The coupling of the present invention ensures full engagement with a conduit by making it readily apparent when the conduit is not correctly located within the coupling. The coupling can be a single-piece, integral component, thereby keeping manufacturing costs low and avoiding the risk of lost parts.

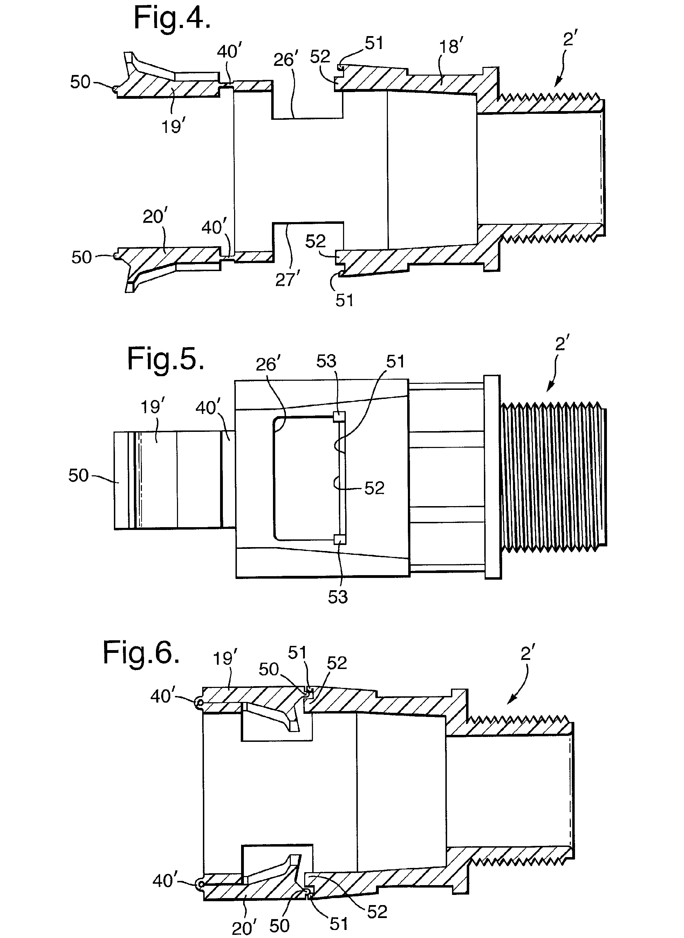

The retaining means could take various different forms, as shown in Figures 4 to 6. This coupling has some of the same features as the coupling 2 so the same reference numbers are used for equivalent parts with the addition of a prime '. The coupling 2' has two catches 19' and 20' on opposite sides of the housing 18' and attached by a hinge 40'. The catches 19' and 20' differ from those in the coupling 2 in that they do not have retaining levers but are instead retained in a closed position by means of a lip 50 on the free end of the catch. The lip 50 engages under a shallow ledge 51 projecting from the housing 18 on the right-hand edge of the apertures 26' and 27'. A shoulder 52 also projects from the right-hand edge of the apertures 26' and 27' beneath the ledge 51. When the catches 19' and 20' are closed, as shown in Figure 6, the lip 50 on each catch snaps past the respective ledge 51 and engages between the ledge and the shoulder 52 to retain the catches in the closed position. The catches 19' and 20' can be opened again, without the need for a tool, by pressing down on two release tabs 53 at opposite sides of the right-hand end of the aperture. These tabs 53 act to lift the free end of the catches 19' and 20' upwardly clear of the ledges 51.

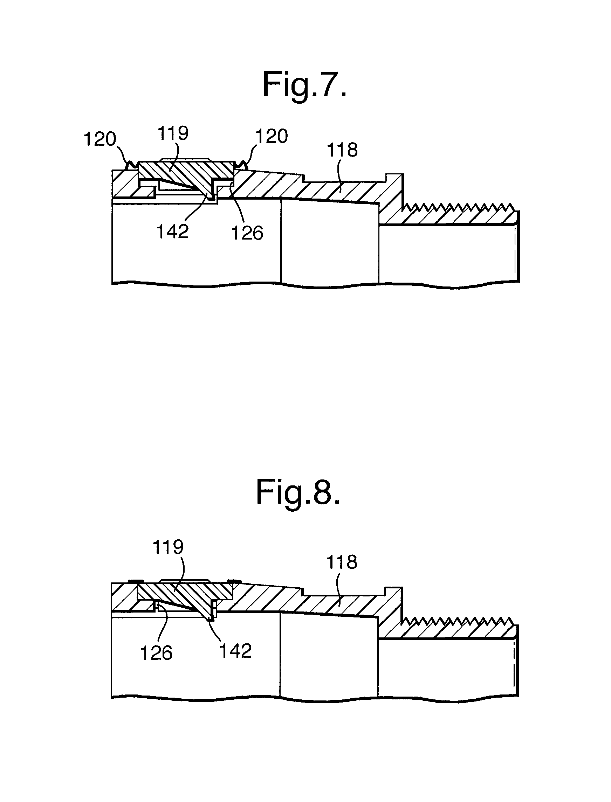

Figures 7 and 8 show another alternative form of coupling with two catches 119 (only one of which is shown) on opposite sides of the housing 118. The catches 119 are moulded integrally with the housing 118 and are attached with the housing by means of four flexible webs 120, one at each corner. Different numbers of webs could be used. The lower surface of both catches 119 has an inwardly-projecting tooth 142. The edges of the catches 119 and the apertures 126 within which they are mounted have some form of engagement (not shown) such as a projection and recess, which acts to retain the catches in their closed, locking position. The coupling is provided with the catches 119 in the open, outer position shown in Figure 7 where the teeth 142 are located to allow free insertion of the conduit into the housing. After insertion of the conduit, the user simply pushes the catches 119 in so that they engage in the locking position, as shown in Figure 8. In this position, the teeth 142 locate between adjacent corrugations on the conduit to prevent it being withdrawn. If the conduit is not correctly inserted fully into the housing 118, the teeth 142 may align with corrugations rather than with grooves between corrugations, thereby preventing the catches 119 being pushed in. The catches project from the outside of the housing when not fully locked and lie flush with the outside of the housing when they are fully locked so that the user knows when it is necessary to reposition the conduit and try again to lock in the catches 119.

It is not essential for the retaining means to be formed as an integral part of the housing. A coupling could have two catches similar to the catches 119 shown in Figures 7 and 8 but which are formed as separate pieces and subsequently fitted into the housing. The catches could be retained in a preliminary position by engagement of formations on the catches and housing. In this position the catches would enable free insertion of the conduit. When the conduit had been fully inserted, the catches could be pressed in to a second, locking position where teeth on the catches engage between corrugations on the conduit. Again, as with the previous couplings, the catches would be arranged so that they could not be moved to the locking position unless the teeth were correctly engaged between corrugations.

It will be appreciated that the coupling may have any number of one or more catches or retaining means. Where additional security is needed against the conduit being pulled out it may be preferable to have four retaining catches equally disposed around the coupling.

## Claims

1. A coupling (2, 2') for a corrugated pipe (1), the coupling including a housing (18, 18', 118) and a retainer (19, 20, 19', 20', 119) for retaining the pipe (1) within the housing (18, 18', 118), **characterised in that** the retainer (19, 20, 19', 20', 119) is manually movable between a first, unlocked position and a second locking position, and that the retainer (19, 20, 19', 20', 119) and the housing (18, 18', 118) are provided with engaging formations (46, 30, 50, 51) that fully engage only when the retainer is in correct engagement between adjacent corrugations (11) on the pipe (1).

2. A coupling according to Claim 1, **characterised in that** the engaging formations include at least one spring member (44).

3. A coupling according to Claim 2, **characterised in that** the spring member (44) is provided on the retainer (19, 20).

4. A coupling according to Claim 3, **characterised in that** the retainer (19, 20) has two spring members (44) on opposite sides.

5. A coupling according to any one of Claims 2 to 4, **characterised in that** the or each spring member (44) is arranged to engage a ledge (30) or a respective ledge on the housing (18).

6. A coupling according to any one of the preceding claims, **characterised in that** the retainer (19, 20, 19', 20') is hinged with the housing (18, 18') as an integral moulding with the housing.

7. A coupling according to Claim 1, **characterised in that** the retainer (119) is attached with the housing by flexible webs (120) at each end.

8. A coupling according to any one of the preceding claims, **characterised in that** the retainer (19, 20, 19', 20', 119) lies flush with the outside of the housing (18, 18', 118) when fully locked and projects from the outside of the housing when not fully locked.
